# NEUE EUROPÄISCHE PATENTSCHRIFT

(11) **EP 1 619 410 B2**
(45) Veröffentlichungstag und Bekanntmachung des Hinweises auf die Entscheidung über den Einspruch: **23.05.2018**
(45) Hinweis auf die Patenterteilung: 23.07.2014
(21) Anmeldenummer: 05004634.1
(22) Anmeldetag: 03.03.2005
(51) Int. Cl.: F16F 15/12, F16D 41/00, F16D 3/12

(54) **Vorrichtung, Kupplungseinrichtung und ein Verfahren zur Schwingungsentkopplung**
Device, coupling arrangement and method for decoupling of vibration
Dispositif, accouplement et méthode pour le découplage de vibration

(30) Priorität: 23.07.2004 DE 102004035969
(43) Veröffentlichungstag der Anmeldung: 25.01.2006
(73) Patentinhaber: Vibracoustic GmbH, 64293 Darmstadt (DE)
(72) Erfinder: Gräber, Stefan, 79395 Neuenburg (DE)
(74) Vertreter: Flügel Preissner Schober Seidel

(56) Entgegenhaltungen:
- EP-A- 1 279 807
- EP-A2- 0 671 570
- WO-A-97/31198
- WO-A-98/50709
- WO-A-2004/070225
- DE-A1- 4 018 596
- DE-A1- 4 322 710
- DE-A1- 4 427 636
- DE-A1- 19 511 188
- DE-A1- 19 525 305
- DE-A1- 19 525 744
- DE-A1- 19 535 889
- DE-A1- 19 611 258
- DE-C1- 4 426 690
- DE-C1- 19 506 454
- DE-C1- 19 636 628
- DE-U1- 20 121 299
- FR-A- 768 736
- FR-A- 2 754 856

## Beschreibung

### Technisches Gebiet

Die Erfindung betrifft eine Vorrichtung gemäß dem Oberbegriff des Patentanspruchs 1. Die Erfindung betrifft des Weiteren ein Verfahren zur Schwingungsentkopplung

### Stand der Technik

Aus der WO 20041070225 A1, der WO 98/50709 A1 und der EP 1 279 807 A1 sind Vorrichtungen bekannt, bei denen als Federkörper Spiralfedern Verwendung finden. Aus der FR 2 754 856 A1 ist eine Vorrichtung bekannt, bei der elastomere Körper in Ringräumen angeordnet sind.

Aus der DE 44 26 690 C1 ist eine Vorrichtung bekannt, bei der ein Freilaufelement durch einen Schwungring mit einem Elastomer verbunden ist

Derartige Vorrichtungen und Verfahren sind aus dem Stand der Technik bereits bekannt. Anwendungen finden solche Vorrichtungen und Verfahren insbesondere im Keilrippenriementrieb in Automobilen, mit dem verschiedenste Aggregate wie z. B. die Lichtmaschine oder der Klimakompressor angetrieben werden. Dabei finden entkoppelte Riemenscheiben Anwendung, deren Entkopplung der Isolierung von Schwingungen dient, die durch die Kurbelwelle eingetragen werden. Nachteilig bei den gattungsbildenden Vorrichtungen und Verfahren ist die sich aufbauende Systemresonanz, die bei Start- und Stopvorgängen bei bestimmten Riemenkonfigurationen auftritt. Dies führt zu dem so genannten Start-Stop-Quietschen. Dies kann durch unterschiedlichste Modifikationen am Riementrieb angegangen werden. Dabei ist aus dem Stand der Technik bekannt, hydraulische Spanner oder zusätzliche Umlenkrollen an geeigneter Stelle anzubringen. Bei einigen der genannten Modifikationen kann es zu nur schwer kalkulierbaren Wechselwirkungen der im Gesamtsystem ineinander greifenden Instrumente kommen, wodurch das gesamte System nur schwer zu beherrschen ist. Dies erfordert eine komplizierte Abstimmung der gesamten im System wirkenden Bauelemente.

### Darstellung der Erfindung

Der Erfindung liegt daher die Aufgabe zugrunde, eine Vorrichtung und ein Verfahren der eingangs genannten Art derart auszugestalten und weiterzubilden, dass eine optimale Schwingungsentkopplung bei einfacher Abstimmbarkeit der miteinander wechselwirkenden Elemente gewährleistet ist.

Erfindungsgemäß wird die voranstehende Aufgabe mit den Merkmalen des Patentanspruchs 1 gelöst.

Erfindungsgemäß ist erkannt worden, dass die Vorkehrung eines Freilaufelements, welches mit dem Federkörper in Reihe geschaltet ist, eine unmittelbare Wechselwirkung zweier entkopplungsaktiver Elemente realisiert. Des Weiteren ist eine im Hinblick auf Resonanzschwingungen problemlos abstimmbare Entkopplung möglich, da ein Freilaufelement in einer Richtung einen Leerlauf bewirkt, der eine Übertragung von Schwingungen verhindert.

Darüberhinaus ist erkannt worden, dass die Zuordnung eines Freilaufelements zur Kupplungseinrichtung die Vorkehrung eines Freilaufelements an dem Riementrieb nachgeordneten Aggregaten überflüssig macht. Insoweit können Schwingungen wirksam an der Quelle ihrer Entstehung reduziert werden, ohne weitere Systembauteile im Hinblick auf ihr Schwingungsverhalten abzustimmen.

Der Federkörper ist als Elastomer ausgebildet. Die Ausbildung des Federkörpers als Elastomer weist in vielerlei Hinsicht Vorteile auf. Ein Elastomer ist durch gängige Verfahren mittlerweile sehr kostengünstig an metallische Bauteile anvulkanisierbar. Dies realisiert eine feste Verbindung des Elastomers mit den ihm zugeordneten Bauteilen. Des weiteren sind Elastomere unanfällig gegen Korrosion und weisen ausgezeichnete elastische Eigenschaften auf.

Das abtriebsseitige Element ist durch ein Gleit- oder Wälzlager gelagert. Die Vorkehrung eines Gleit- oder Wälzlagers realisiert eine reibungsarme Bewegung des abtriebsseitigen Elements relativ zum antriebsseitigen Element. Hierdurch werden Verschleißerscheinungen stark reduziert. Des weiteren können geeignete Lager bei Vorkehrung von Schmiermitteln zur Steigerung der Entkopplungsgüte beitragen, nämlich dahingehend, dass durch geeignete Wahl der Viskosität der Schmiermittel das Relaxationsverhalten des abtriebsseitigen Elements beeinflußbar ist.

Folglich ist eine Vorrichtung angegeben, die die genannte Aufgabe löst.

Das Freilaufelement und der Federkörper könnten als in einem Bauteil integrierte Elemente fungieren. Dies realisiert eine besonders kompakte Bauweise und einfache Fertigung der Vorrichtung. Insoweit ist es möglich, ein einziges Bauteil bei der Fertigung der Vorrichtung zu montieren.

Das Freilaufelement und der Federkörper könnten in radialer Richtung benachbart angeordnet sein. Diese Bauweise ermöglicht eine besonders günstige Kraftübertragung zwischen den beiden Bauteilen.

Das Freilaufelement und der Federkörper könnten in axialer Richtung benachbart angeordnet sein. Diese Ausgestaltung realisiert vorteilhaft einen in radialer Richtung besonders flachen Aufbau. Dabei ist insbesondere vorteilhaft, dass der radiale Bauraum nahezu vollständig von einem Federkörper ausgefüllt werden kann, was die Entkopplungsgüte und Scherbelastung des Federkörpers begünstigt.

Das Freilaufelement könnte zwischen antriebsseitigem Element und Federkörper angeordnet sein. Des weiteren könnte das Freilaufelement zwischen Federkörper und abtriebsseitigem Element angeordnet sein. Ganz in Abhängigkeit der Charakterisitk der zu reduzierenden Schwingungen, kann der Entkopplungsgrad durch geeignete örtliche Positionierung des Freilaufelements relativ zum Federkörper eingestellt werden. Hierdurch ist der Schwingungsreduktionsgrad der gesamten Vorrichtung erheblich verbesserbar.

Vor diesem Hintergrund könnte das Freilaufelement direkt auf der Kurbelwelle eines Motors platziert sein oder dieser in anderer Weise zugeordnet sein. Dabei ist eine direkte Verbindung ebenso denkbar wie ein Wirkverbindung mit einem weiteren mit der Kurbelwelle verbundenen Element. Hierdurch kann die Entstehung von Schwingungen direkt an deren Quelle unterbunden werden.

Das Freilaufelement ist durch ein Verbindungselement mit einem radial benachbarten Bauteil verbunden. Die Vorkehrung eines Verbindungselements ist vorteilhaft im Hinblick auf die Montage. Durch die Vorkehrung von Verbindungselementen sowohl am radial benachbarten Bauteil als auch am Freilaufelement selbst ist es möglich, ineinandergreifende Verbindungselemente vorzusehen. Diese können kraftschlüssig oder formschlüssig miteinander in Verbindung stehen.

Das Verbindungselement ist als Buchse ausgebildet. Die Vorkehrung einer Buchse ist vorteilhaft im Hinblick auf eine kostengünstige Fertigung, da Buchsen serienmäßig in großer Zahl einfach erhältlich sind. Des Weiteren sind durch den Einsatz von Buchsen Presspassungen realisierbar.

Das Freilaufelement könnte als Rollenfreilauf ausgebildet sein. Die Vorkehrung eines Rollenfreilaufs zeichnet sich durch eine besonders geringe Störanfälligkeit aus.

Denkbar ist auch, das Freilaufelement als Klinkenfreilauf auszubilden. Dabei finden klinkenartige Elemente Verwendung, die in einer Drehrichtung greifen und eine Kraftübertragung ermöglichen und in entgegengesetzter Richtung einen Freilauf realisieren.

Vor diesem Hintergrund ist es auch denkbar, einen Bolzenfreilauf zu verwenden.

Des Weiteren ist die eingangs genannte Aufgabe im Hinblick auf ein Verfahren zur Schwingungsentkopplung mit den Merkmalen des Patentanspruchs 11 gelöst.

Um Wiederholungen in Bezug auf die der Lehre zu Grunde liegende erfinderische Tätigkeit sowie auf vorteilhafte Ausgestaltungen der Lehre zu vermeiden, sei an dieser Stelle auf die Ausführungen zur Vorrichtung verwiesen.

Das antriebsseitige Element ist eine Nabe.

### Kurzbeschreibung der Zeichnung

In der Zeichnung zeigen
- Fig. 1: in einer Schnittzeichnung eine Vorrichtung, bei der das Freilaufelement zwischen abtriebsseitigem Element und Federkörper angeordnet ist, und
- Fig. 2: ebenfalls in einer Schnittzeichnung eine Vorrichtung bei der das. Freilauflement zwischen antriebsseitigem Element und Federkörper angeordnet ist.

### Ausführung der Erfindung

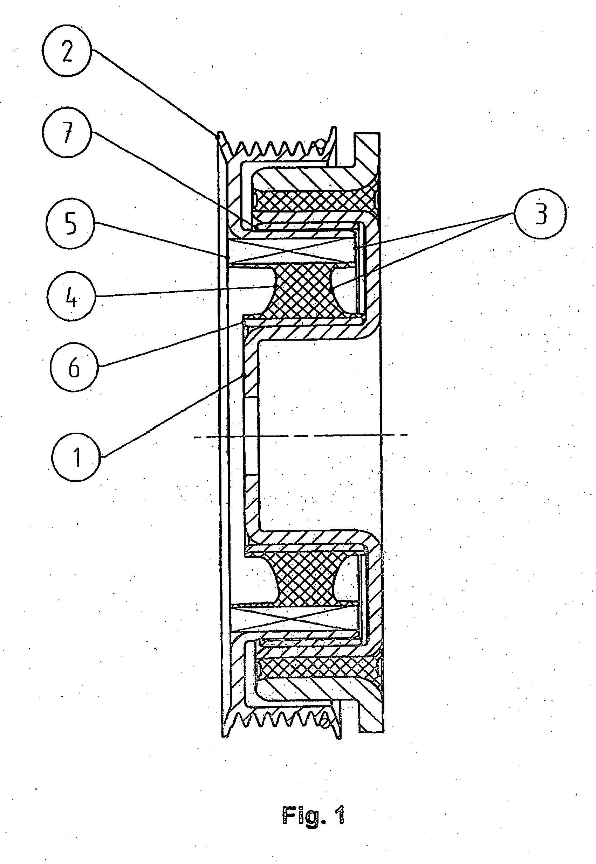

Fig. 1 zeigt eine Vorrichtung mit einem antriebsseitigen Element 1 und einem abtriebsseitigen Element 2. Das antriebsseitige Element 1 und das abtriebsseitige Element 2 sind miteinander über eine Kupplungseinrichtung 3 entkoppelt verbunden. Die Kupplungseinrichtung 3 umfasst einen Federkörper 4, der zwischen antriebsseitigem Element 1 und abtriebsseitigem Element 2 angeordnet ist. Die Kupplungseinrichtung 3 umfasst des Weiteren ein Freilaufelement 5, welches dem Federkörper 4 radial benachbart angeordnet ist.

Das Freilaufelement 5 und der Federkörper 4 sind als in Reihe geschaltete Elemente angeordnet. Das Freilaufelement 5 und der Federkörper 4 sind in einem Bauteil integriert.

Das Freilaufelement 5 ist zwischen Federkörper 4 und abtriebsseitigem Element 2 angeordnet.

Der Federkörper 4 ist als Elastomer ausgebildet und das abtriebsseitige Element 2 ist durch ein Gleitlager 7 gelagert.

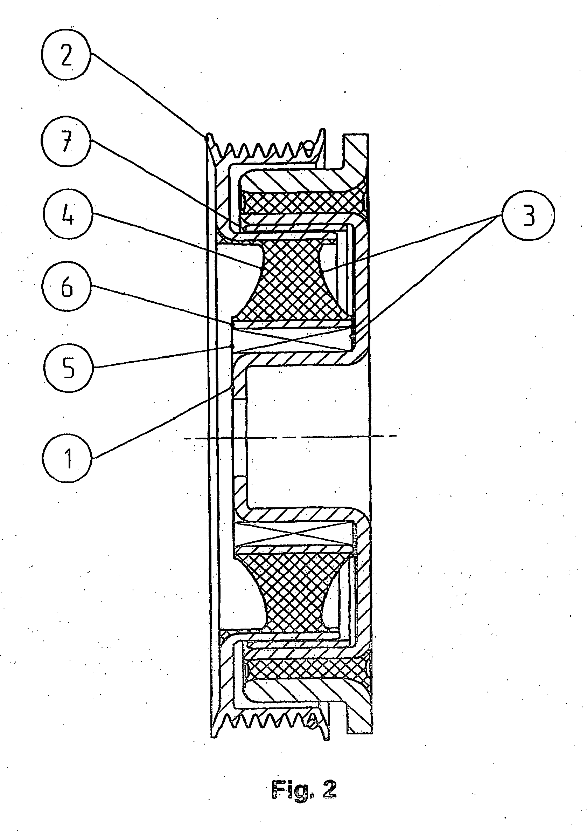

Fig. 2 umfasst ein antriebsseitiges Element 1 und ein abtriebsseitiges Element 2, das durch ein Gleitlager 7 gelagert ist. Das Freilaufelement 5 ist zwischen antriebsseitigem Element 1 und Federkörper 4 angeordnet. Das Freilaufelement 5 ist durch eine Buchse 6 mit dem Federkörper 4 verbunden.

## Patentansprüche

1. Vorrichtung zur Schwingungsentkopplung, umfassend ein als Nabe fungierendes antriebsseitiges Element (1) und als abtriebsseitiges Element (2) eine Riemenscheibe, wobei das antriebsseitige Element (1) und die Riemenscheibe (2) miteinander über eine Kupplungseinrichtung (3) schwingungsentkoppelt wirkverbunden sind und wobei die Kupplungseinrichtung (3) einen Federkörper (4) umfasst, wobei die Kupplungseinrichtung (3) ein Freilaufelement (5) umfasst, welches mit dem Federkörper (4) in Reihe geschaltet ist, um eine unmittelbare Wechselwirkung zweier entkopplungsaktiver Elemente zu realisieren, wobei das Freilaufelement (5) durch ein als Buchse (6) ausgebildetes Verbindungselement mit einem radial benachbarten Bauteil verbunden ist, und wobei die Riemenscheibe (2) durch ein Gleitlager (7) oder Wälzlager am antriebsseitigen Element (1) gelagert ist und der Federkörper (4) als Elastomer ausgebildet ist.

2. Vorrichtung nach Anspruch 1, **dadurch gekennzeichnet, dass** das Freilaufelement (5) und der Federkörper (4) in einem Bauteil integriert sind.

3. Vorrichtung nach Anspruch 1 oder 2, **dadurch gekennzeichnet, dass** das Freilaufelement (5) und der Federkörper (4) in radialer Richtung benachbart angeordnet sind.

4. Vorrichtung nach Anspruch 1 oder 2, **dadurch gekennzeichnet; dass** das Freilaufelement (5) und der Federkörper (4) in axialer Richtung benachbart angeordnet sind.

5. Vorrichtung nach einem der Ansprüche 1 bis 3, **dadurch gekennzeichnet, dass** das Freilaufelement (5) zwischen antriebsseitigem Element (1) und Federkörper (4) angeordnet ist.

6. Vorrichtung nach einem der Ansprüche 1 bis 3, **dadurch gekennzeichnet, dass** das Freilaufelement (5) zwischen Federkörper (4) und abtriebsseitigem Element (2) angeordnet ist.

7. Vorrichtung nach einem der Ansprüche 1 bis 6, **dadurch gekennzeichnet, dass** das Freilaufelement (5) als Rollenfreilauf ausgebildet, ist.

8. Vorrichtung nach einem der Ansprüche 1 bis 6, **dadurch gekennzeichnet, dass** das Freilaufelement (5) als Klinkenfreilauf ausgebildet ist.

9. Verfahren zur Schwingungsentkopplung, insbesondere unter Verwendung einer Vorrichtung nach einem der Ansprüche 1 bis 8, wobei ein als Nabe fungierendes antriebsseitiges Element (1) und eine Riemenscheibe (2) miteinander über eine Kupplungseinrichtung (3) schwingungsentkoppelt wirkverbunden werden, wobei in der Kupplungseinrichtung (3) ein Federkörper (4) verwendet wird, wobei in der Kupplungseinrichtung (3) ein Freilaufelement (5) mit dem Federkörper (4) in Reihe geschaltet wird, um eine unmittelbare Wechselwirkung zweier entkopplungsaktiver Elemente zu realisieren, wobei das Freilaufelement (5) durch ein als Buchse (6) ausgebildetes Verbindungselement mit einem radial benachbarten Bauteil verbunden ist, wobei die Riemenscheibe (2) durch ein Gleitlager öder Wälzlager am antriebsseitigen Element (1) gelagert ist und wobei der Federkörper (4) als Elastomer ausgebildet ist.

## Claims

1. A device for vibration decoupling, comprising an input-side member (1) acting as a hub and a belt pulley as an output-side member (2), wherein the input-side member (1) and the belt pulley (2) are operatively connected to each other in a vibration-decoupled manner via a coupling device (3) and wherein the coupling device (3) comprises a resilient body (4), wherein the coupling device (3) comprises a freewheel member (5) connected in series with the resilient body (4) to implement an immediate interaction of two actively decoupling members, wherein the freewheel member (5) is connected to a radially adjacent component by a connecting member formed as a bushing (6), and wherein the belt pulley (2) is supported on the input-side member (1) by a friction bearing (7) or an anti-friction bearing, and the resilient body (4) is formed as an elastomer.

2. The device according to claim 1, **characterised in that** the freewheel member (5) and the resilient body (4) are integrated in a single component.

3. The device according to claim 1 or 2, **characterised in that** the freewheel member (5) and the resilient body (4) are disposed adjacently in the radial direction.

4. The device according to claim 1 or 2, **characterised in that** the freewheel member (5) and the resilient body (4) are disposed adjacently in the axial direction.

5. The device according to any one of the claims 1 to 3, **characterised in that** the freewheel member (5) is disposed between the input-side member (1) and the resilient body (4).

6. The device according to any one of the claims 1 to 3, **characterised in that** the freewheel member (5) is disposed between the resilient body (4) and the output-side member (2).

7. The device according to any one of the claims 1 to 6, **characterised in that** the freewheel member (5) is configured as a roller-type freewheel.

8. The device according to any one of the claims 1 to 6, **characterised in that** the freewheel member (5) is configured as a ratchet-type freewheel.

9. A method for vibration decoupling using a device according to any one of the claims 1 to 8, wherein an input-side member (1) acting as a hub and a belt pulley (2) are operatively connected to each other in a vibration-decoupled manner via a coupling device (3), wherein a resilient body (4) is used in the coupling device (3), wherein a freewheel member (5) is connected in series with the resilient body (4) in the coupling device (3) to implement an immediate interaction of two actively decoupling members, wherein the freewheel member (5) is connected to a radially adjacent component by a connecting member formed as a bushing (6), wherein the belt pulley (2) is supported on the input-side member (1) by a friction bearing or an anti-friction bearing, and wherein the resilient body (4) is formed as an elastomer.

## Revendications

1. Dispositif pour le découplage de vibrations, comprenant un élément côté entraînement (1) fonctionnant comme un moyeu et une poulie à gorge à titre d'élément côté entraîné (2), tels que l'élément (1) côté entraînement et la poulie à gorge (2) sont reliés l'un à l'autre via un dispositif de couplage (3) de manière découplée vis-à-vis des vibrations, dans lequel le dispositif de couplage (3) comprend un corps de ressort (4) et le dispositif de couplage (3) comprend un élément à roue libre (5) qui est monté en série avec le corps de ressort (4) pour réaliser une interaction immédiate entre deux éléments découplant activement, dans lequel l'élément à roue libre (5) est relié par un élément de liaison réalisé sous forme de douille (6) avec un composant voisin en direction radiale, et dans lequel la poulie à gorge (2) est montée sur l'élément côté entraînement (1) via un palier coulissant (7) ou un palier à roulements, et le corps de ressort (4) est réalisé en élastomère.

2. Dispositif selon la revendication 1, **caractérisé en ce que** l'élément à roue libre (5) et le corps de ressort (4) sont intégrés dans un composant.

3. Dispositif selon la revendication 1 ou 2, **caractérisé en ce que** l'élément à roue libre (5) et le corps de ressort (4) sont agencés au voisinage en direction radiale.

4. Dispositif selon la revendication 1 ou 2, **caractérisé en ce que** l'élément à roue libre (5) et le corps de ressort (4) sont agencés au voisinage en direction axiale.

5. Dispositif selon l'une des revendications 1 à 3, **caractérisé en ce que** l'élément à roue libre (5) est agencé entre l'élément côté entraînement (1) et le corps de ressort (4).

6. Dispositif selon l'une des revendications 1 à 3, **caractérisé en ce que** l'élément à roue libre (5) est agencé entre le corps de ressort (4) et l'élément côté entraîné (2).

7. Dispositif selon l'une des revendications 1 à 6, **caractérisé en ce que** l'élément à roue libre (5) est réalisé sous forme de roue libre à galets.

8. Dispositif selon l'une des revendications 1 à 6, **caractérisé en ce que** l'élément à roue libre (5) est réalisé sous forme de roue libre à cliquets.

9. Procédé pour le découplage de vibrations en utilisant un dispositif selon l'une des revendications 1 à 8, dans lequel un élément côté entraînement (1) fonctionnant comme un moyeu et une poulie à gorge (2) sont reliés l'un à l'autre via un dispositif de couplage (3) d'une manière découplée vis-à-vis des vibrations, dans lequel on utilise un corps de ressort (4) dans le dispositif de couplage (3), et dans le dispositif de couplage (3) un élément à roue libre (5) est monté en série avec le corps de ressort (4) pour réaliser une interaction immédiate entre deux éléments découplant activement, dans lequel l'élément à roue libre (5) est relié par un élément de liaison réalisé sous forme de douille (6) avec un composant voisin en direction radiale, dans lequel la poulie à la gorge est montée sur l'élément côté entraînement (1) au moyen d'un palier coulissant ou d'un palier à roulements, et dans lequel le corps de ressort (4) est réalisé en élastomère.
